# EUROPÄISCHE PATENTSCHRIFT

(11) **EP 1 229 736 B1**
(45) Veröffentlichungstag und Bekanntmachung des Hinweises auf die Patenterteilung: **06.08.2003**
(21) Anmeldenummer: 01102243.1
(22) Anmeldetag: 31.01.2001
(51) Int. Cl.: H04N 7/16

(54) **Sende-Empfangs-System**
Transmission-Reception system
Système de transmission-réception

(43) Veröffentlichungstag der Anmeldung: 07.08.2002
(73) Patentinhaber: Maier, Johannes, 72488 Sigmaringen (DE)
(72) Erfinder: Maier, Johannes, 72488 Sigmaringen (DE)
(74) Vertreter: Schurack, Eduard F.

(56) Entgegenhaltungen:
- GB-A- 2 344 009
- US-A- 5 565 909

## Beschreibung

Die vorliegende Erfindung betrifft ein Sende-Empfangs-System nach dem Oberbegriff von Patentanspruch 1 sowie ein Verfahren zur Übertragung digitaler Daten nach dem Oberbegriff von Patentanspruch 15. Ein derartiges Sende-Empfangs-System und ein derartiges Verfahren sind bekannt aus der GB 2 344 009 A.

Die Übertragung digitaler Daten von Sendern zu Empfängern ist bekannt. In diesem Zusammenhang ist kürzlich ein neuer Universal-Multimedia-Standard eingeführt worden, der unter der Bezeichnung DVB (Digital Video Broadcasting) bekannt ist. Die zugehörigen ETSI-Standards liegen als Normen ETS 300421, ETS 300429 und ETS 300744 vor. Der Begriff Digital Video Broadcasting umfasst eine Reihe zueinander kompatibler Standards zur digitalen Fernsehübertragung über Satelliten, terrestrische Sender und Breitband-Kabelnetze. Bildkompression, Fehlerkorrektur und angepasste Modulationsverfahren ermöglichen eine Vervielfachung der anbietbaren Dienste bei nahezu fehlerfreier Übertragung auf den vorhandenen Übertragungswegen.

Der Übergang zur digitalen Übertragungstechnik ermöglicht eine wesentlich effizientere Nutzung des requenzspektrums sowie mehr Flexibilität bei der Aufteilung der Übertragungskapazität. Für den Rundfunkteilnehmer bedeutet dies eine Ausweitung des Programmangebotes, für den Programmanbieter eine Senkung der Übertragungskosten pro angebotenem Dienst.

Die übertragungstechnischen Konzepte unterscheiden sich je nachdem, ob über Kabel, Satellit oder auf terrestrischem Wege übertragen wird. So funktioniert die Satellitenübertragung nach dem sogenannten DVB-S, die Kabelübertragung nach dem DVB-C und die terrestrische Übertragung nach dem DVB-T Standard. Empfänger können auf eine der Übertragungsmöglichkeiten spezifiziert sein, können jedoch auch so ausgebildet sein, daß sie Signale empfangen können, die über zwei oder gar alle drei Übertragungswege gesendet wurden.

In anderen Ländern, beispielsweise in den USA und Japan, gibt es digitale Sende-Empfangs-Systeme, die zwar nach einem anderen Standard definiert sind, aber prinzipiell vergleichbar funktionieren. Auch die im Nachfolgenden dargestellten Probleme gehen bei diesen Sende-Empfangs-Systemen einher.

Wenn nun beispielsweise über einen Satelliten Radio gehört werden soll, kann der Benutzer eines derartigen DVB-Empfängers unter einer Vielzahl von Radiostationen, in der Größenordnung von mehreren hundert, auswählen. Es bestehen nun folgende Probleme:

Senderseitig besteht die Gefahr, daß ein lokaler Sender, der beispielsweise nur einen Stadtbereich anspricht, in der Vielzahl der angebotenen Radiostationen verlorengeht, da sein Name nicht so bekannt ist, wie der von einigen Radiostationen, die größere Gebiete bedienen. Für den Benutzer des DVB-Empfängers besteht das Problem, daß er die Vielzahl der ihm angebotenen Radiostationen durchsehen muß, um auszuwählen, welchen Sender er empfangen möchte.

Die bereits erwähnte GB 2 344 009 A beschreibt einen Apparat zum Empfangen von Sendedaten, wobei der Empfänger einen Informationsfilter enthält. Dieser Informationsfilter erlaubt nur einen selektiven Datendurchlaß, wobei ein Teil der Sendedaten entsprechend einem vorher festlegbaren Kriterium herausgefiltert wird. Dabei kann dieses Kriterium unter anderem der Ort sein, an dem die Sendedaten empfangen werden. Das bedeutet, daß von dem Empfänger nur die Sendedaten an den Benutzer weitergeleitet werden, die für den Aufstellungsort des Empfängers relevant sind. Einem Benutzer steht zwar die Möglichkeit offen, das Kriterium seinen Wünschen entsprechend festzulegen, insbesondere in der Hinsicht auf sein persönliches Profil. Er hat allerdings nicht die Möglichkeit, Sendedaten zu empfangen, die für einen anderen lokalen Umkreis gesendet werden.

Weiterhin beschreibt die US 5,565,909 verschiedene Möglichkeiten, wie geografische Daten gefiltert werden können. Vor allem sollen dadurch die unterschiedlichen Informationsinteressen der Benutzer innerhalb einer Region befriedigt werden, die aufgrund geografischer Charakteristika entstehen. Dazu zählen beispielsweise Informationen über Flut oder starken Wind, die nur für Leute von Relevanz sind, die an einem Fluß oder auf der Westseite eines Wohnkomplexes leben. Diese speziellen geografischen Informationen sind, wenn auch beispielsweise in der gleichen Stadt ausgestrahlt, so doch nur für einen speziellen Kreis von Leuten interessant. Dieses Dokument zielt auf einen Filter ab, der die Benutzer nur mit den Informationen versorgt, die für sie von Relevanz sind.

Die Aufgabe der vorliegenden Erfindung liegt deshalb darin, ein Sende-Empfangs-System bereitzustellen, mit dem die beschriebenen Nachteile vermieden werden können. Es ist auch Aufgabe der Erfindung, einen geeigneten Sender und einen geeigneten Empfänger sowie ein korrespondierendes Übertragungsverfahren bereitzustellen.

Erfindungsgemäß wird diese Aufgabe gelöst durch ein Sende-Empfangs-System mit den Merkmalen von Patentanspruch 1 sowie durch ein Verfahren zur Übertragung digitaler Daten mit den Merkmalen von Patentanspruch 14 sowie durch einen Empfänger gemäß Patentanspruch 13.

Der Erfindung liegt die Erkenntnis zugrunde, daß für den Benutzer des DVB-Empfängers bestimmte Sender deshalb nicht interessant sind, weil sie lokale Ortssender sind. Zweifelsohne sind für den Benutzer des DVB-Empfängers lokale Ortssender mit lokal abgestimmten Programmen interessant, jedoch nur solche, die für seinen Aufenthaltsort senden. Eine Vorauswahl kann deshalb dadurch getroffen werden, daß der Aufstellungsort des DVB-Empfängers verglichen wird mit den empfangenen Daten, sofern diesen Daten eine Ortsinformation anhaftet. Insbesondere kleinere Sender können dadurch sicherstellen, daß sie nicht in der Vielzahl von häufig bekannteren in langen Programmtafeln aufgelisteten Sendern untergehen. Vielmehr gelingt es durch diese Maßnahme in sehr einfacher Weise, dem Benutzer des DVB-Empfängers mitzuteilen, daß der betreffende Sender Informationen ausstrahlt, die am Aufstellungsort des DVB-Empfängers von Interesse sein können.

Insofern ist es bevorzugt, daß die zweite ortsspezifische Kenngröße - hierbei kann es sich beispielsweise um die Postleitzahl des Aufstellungsortes handeln - dem Aufstellungsort des Empfängers oder einem von einem Benutzer willkürlich gewählten Ort entspricht. Insbesondere für tragbare Empfänger kann es interessant sein, daß diese beispielsweise im Urlaub oder auf Reisen auch auf einen anderen Ort als den Aufstellungsort eingestellt werden können.

Die erste ortsspezifische Kenngröße kann dann beispielsweise bei Sendern, die größere Gebiete abdecken, eine Länderkennung aufweisen, die dann weiter spezifiziert werden kann durch Hinzunahme der ersten Ziffer der Postleitzahl, der zweiten, schließlich bis zur Hinzunahme der fünften Ziffer der Postleitzahl.

Den Nutzdaten können überdies zweite Hilfsdaten zugeordnet sein und der Empfänger kann eine Filtereinheit umfassen, mit der die Nutzdaten im Hinblick auf die zweiten Hilfsdaten filterbar sind. Durch die zweiten Hilfsdaten können beispielsweise musikalische Vorlieben berücksichtigt werden. So ist es unwahrscheinlich, daß ein eingefleischter Klassikfan sich auch für Hardrock interessiert, so daß es für ihn Sinn macht - selbst wenn es sich um lokale Hardrocksender handelt - diese nicht zur Auswahl anzubieten. Allgemein können die zweiten Hilfsdaten Angaben zu Arten von Fernsehsendungen und/oder Arten von Musiksendungen und/oder Angaben zu Internet - Homepages und/oder Angaben zu Werbung und Veranstaltungen enthalten.

Um den persönlichen Geschmäckern der Bedienpersonen des Empfängers gerecht zu werden, ist bevorzugt, daß jede Filtereinheit von einer Bedienperson des Empfängers spezifiziert werden kann. Insbesondere wird dadurch ermöglicht, sich ändernden Wünschen der Bedienpersonen gerecht zu werden.

Bevorzugt umfasst der Empfänger weiterhin eine Anzeigeeinheit, auf der eine mit den Nutzdaten korrelierte Anzeige darstellbar ist. Hierbei kann es sich um eine im Empfänger integrierte Anzeigeeinheit handeln, jedoch auch um einen Computerbildschirm oder ein Femsehgerät. Die mit den Nutzdaten korrelierte Anzeige kann dann entsprechend dem den Nutzdaten zugeordneten Merkmal auf der Anzeigeeinheit darstellbar sein. Bevorzugt enthält das den Nutzdaten zugeordnete Merkmal eine Aussage darüber, ob und wo die mit den Nutzdaten korrelierte Anzeige auf der Anzeigeeinheit dargestellt wird. Dies bedeutet, daß beispielsweise eine Einteilung der verschiedenen Sender in verschiedene Sendegebiete stattfinden kann, beispielsweise in Sender, die weltweit interessant sind, Sender, die nur in Europa interessant sind, und Sender, die nur in der Stadt interessant sind, in der der DVB-Empfänger aufgestellt ist. Hierbei können Gruppen gebildet werden, wobei der Benutzer des DVB-Empfängers innerhalb der Gruppen den von ihm gewünschten Sender auswählen kann, beispielsweise, um ihn direkt zu hören bzw. zu sehen, oder um ihn in ein bevorzugtes Auswahlmenü einzutragen.

Der Empfänger kann weiterhin eine Eingabeeinheit umfassen, durch die, vorzugsweise unter Zusammenwirken mit der Anzeigeeinheit, die zweite ortsspezifische Kenngröße und/oder die Spezifikationen der Merkmalszuordungseinheit und/oder der mindestens einen Filtereinheit angebbar sind.

Wie bereits erwähnt, können die digitalen Daten durch Satellitenausstrahlung, Kabelübertragung, Internetübertragung oder terrestrische Ausstrahlung an den Empfänger übertragen worden sein.

Die Nutzdaten können Audiosignale und/oder Videosignale umfassen und insbesondere Werbung und/oder Veranstaltungshinweise enthalten. So erfährt beispielsweise der regional avisierte House-Radio-Hörer vom örtlichen Live-Auftritt einer entsprechenden Gruppe, der Jazzfan entsprechendes und der auf die Hausfrauensendung eingestellte DVB-Empfänger informiert, daß es im Supermarkt um die Ecke ein Sonderangebot an Bettvorlegern gibt. Diese Informationen lassen sich beispielsweise als Bildschirminformationen ausstrahlen und können von örtlichen Redaktionen stammen, die auf beliebigen Wegen, beispielsweise über Internet, in die Übertragungswege einschleusen, automatisch adressieren und insertieren.

Ein fundamentaler Vorteil besteht insbesondere für die großen öffentlich-rechtlichen und privaten Fernsehsender, wenn sie gleichzeitig mehrere regionale Werbeblöcke aufschalten, wobei durch den DVB-Empfänger der vom Benutzer ausgewählte angezeigt wird. Dies macht die Ausstrahlung von Werbung sogar über Fernsehsender auch für nur regional tätige Unternehmen interessant, die gezielt werben können und nun weniger dafür zahlen müssen (Sendezeitsharing).

Gemäß einem zweiten und einem dritten Aspekt der vorliegenden Erfindung betrifft die Erfindung auch einen Sender, der derart ausgebildet ist, um in dem erfindungsgemäßen Sende-Empfangs-System eingesetzt zu werden, sowie einen entsprechenden Empfänger.
Weitere vorteilhafte Ausführungsformen ergeben sich aus den Unteransprüchen.

Im Nachfolgenden wird nunmehr eine Ausführungsform des erfindungsgemäßen Sende-Empfangs-Systems unter Hinweisen auf die beigefügten Zeichnungen näher beschrieben. Es zeigen:
Figur 1 ein Ausführungsbeispiel eines erfindungsgemäßen Sende-Empfangs-Systems; und
Figur 2 in schematischer Darstellung eine beispielhafte Anzeige auf der Anzeigeeinheit von Figur 1.

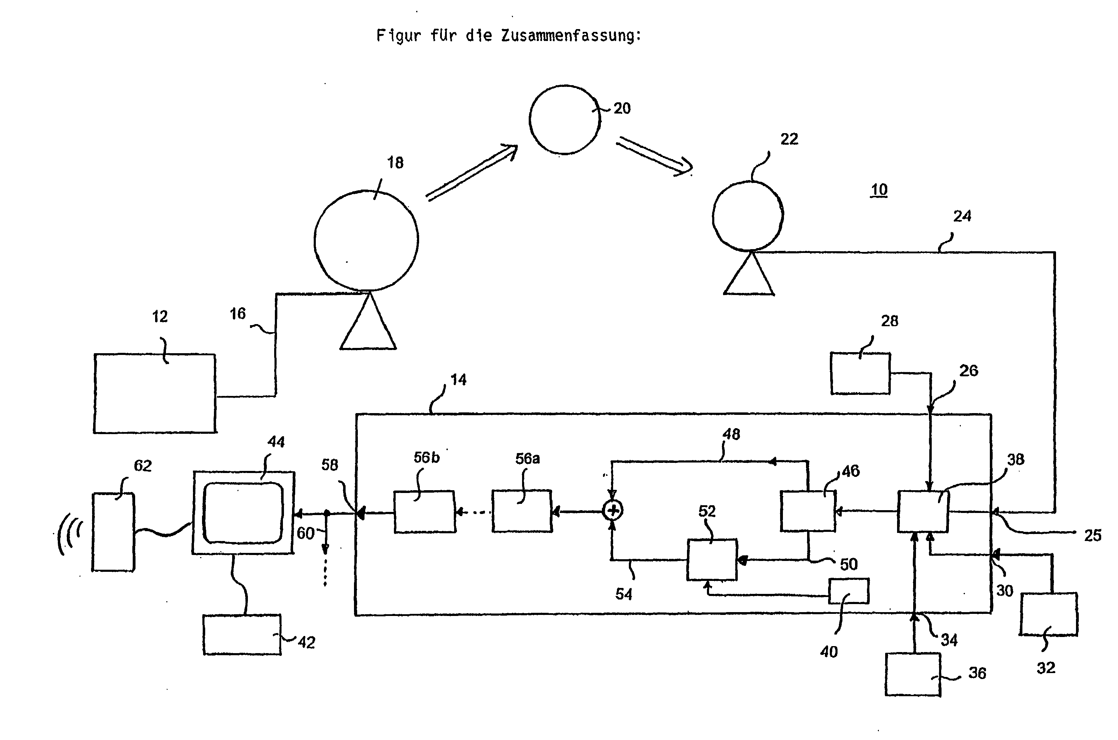

Figur 1 zeigt in schematischer Darstellung ein erfindungsgemäßes Sende-Empfangs-System 10 mit einem Sender 12 und einem Empfänger 14. Der Sender überträgt über eine Leitung 16 digitale Daten an eine Sendestation 18. Wie durch den Pfeil gekennzeichnet, werden die digitalen Daten zunächst an einen Satelliten 20 übertragen, der die Daten wieder abstrahlt, so daß sie von einer Empfangseinheit 22 empfangen werden können. Von der Empfangseinheit 22 werden die Daten über eine Leitung 24 an einen Eingang 25 des Empfängers 14 übertragen. Der Empfänger 14 weist überdies einen Eingang 26 für Signale einer Empfangseinheit 28 für terrestrisch abgestrahlte Signale, einen Eingang 30 für Signale einer Empfangseinheit 33 für über Kabel übertragene Signale sowie einen Eingang 34 für eine Empfangseinheit 36 auf ,die über Internet übertragene Signale empfängt. Im Empfänger 14 ist eine Transformationsvorrichtung 38 angeordnet, die dazu dient, die an den Eingängen 25, 26, 30, 34 bereitgestellten Signale auf ein einheitliches Format zu transformieren. Eine im Empfänger 14 angeordnete Ortsspezifikationseinheit 40 dient dazu, eine ortsspezifische Kenngröße in den Empfänger einzugeben. Hierbei kann es sich beispielsweise um die Postleitzahl des Aufstellungsortes des Empfängers 14 handeln oder die Postleitzahl eines von einem Benutzer willkürlich ausgewählten Orts. Anstelle von Postleitzahlen kommen auch beispielsweise Autokennzeichen, Synonyme für Bundesländer, Namen von Orten, Längen- und Breitengrade, etc. in Betracht. Das Eintragen der ortsspezifischen Größe in die Ortsspezifikationseinheit 40 des Empfängers 14 kann im Zusammenspiel mit einer Eingabeeinheit 42 und einer Anzeigeeinheit 44 erfolgen, auf die weiter unten noch näher eingegangen wird.

Im Empfänger 14 ist weiterhin eine Hilfsdatenerfassungseinheit 46 angeordnet, in die die auf einheitliches Format transformierten Daten, welche sich aus Nutzdaten und Hilfsdaten zusammensetzen, geleitet werden. In der Hilfsdatenerfassungseinheit 46 werden die Nutzdaten von den Hilfsdaten getrennt, wobei die Nutzdaten über einen Pfad 48 weitergeleitet werden und die Hilfsdaten über einen Pfad 50 an eine Merkmalszuordnungseinheiteinheit 52. In der Merkmalszuordnungseinheit 52 werden die Hilfsdaten, die die vom Sender 12 übermittelte ortsspezifische Kenngröße enthalten, korreliert mit der von der Ortsspezifikationseinheit 40 gelieferten Daten. Je nach Korrelationsgrad wird den Nutzdaten 48 über einen Pfad 54 ein entsprechendes Merkmal zugeordnet. Weitere, den Nutzdaten zugeordnete Hilfsdaten werden nach Zusammenführung der Pfade 48 und 54 in vom Benutzer des Empfängers 14 spezifizierbaren Filtereinheiten 56a, 56b ausgewertet. Die weiteren Hilfsdaten können Informationen enthalten zu Arten von Fernsehsendungen und/oder Arten von Musiksendern und/oder Angaben zu Internet-Homepages und/oder Angaben zu Veranstaltungen. Beispielsweise kann dadurch sichergestellt werden, daß nur Radiosendungen, die klassische Musik übertragen, der Anzeigeeinheit 44 bereitgestellt werden. Es kann jedoch auch vorgesehen werden, daß je nach Einstellung der Filtereinheiten 56a, 56b bzw. gemäß dem in der Merkmalszuordnungseinheit 52 zugeordneten Merkmal die zugehörigen Nutzdaten mit unterschiedlicher Priorität an der Anzeigeeinheit 44 angezeigt werden. Am Ausgang 58 des Empfängers 14 werden entsprechend gefilterte bzw. mit Merkmalen gekennzeichnete Nutzdaten bereitgestellt. Diese können beispielsweise der Anzeigeeinheit 44 zur Verfügung gestellt werden, jedoch auch, wie durch den Pfeil 60 gekennzeichnet, an ein Fernsehgerät, Radiogerät oder dergleichen übertragen werden. Bei der Anzeigeeinheit 44 kann es sich um einen Computerbildschirm oder ein Fernsehgerät handeln. Es kann jedoch auch vorgesehen sein, die Anzeigeeinheit 44 integral mit dem Empfänger 14 auszubilden. Insbesondere kann vorgesehen sein, daß die Anzeigeeinheit 44 einen Verstärker umfasst und unmittelbar mit einem Lautsprecher 62 verbunden ist.

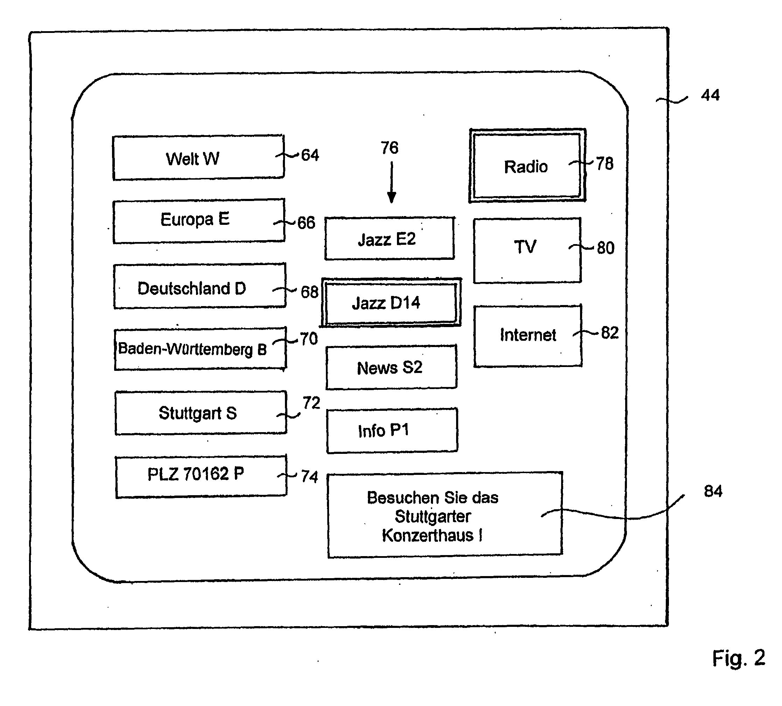

In Figur 2 ist ein Beispiel für die Anzeige auf der Anzeigeeinheit 44 dargestellt. Im dargestellten Beispiel hat der Benutzer des Empfängers 14 in der Ortsspezifikationseinheit 40 die Postleitzahl 70162 eingetragen. In einem linken Bereich der Anzeige sind die vom Empfänger 14 empfangenen Sender unterteilt in unterschiedliche regionale Gebiete. So können durch Anklicken über die Eingabeeinheit 42 oder durch Berühren des Icons 64 auf einem Touch-Screen weltweite Sender zur Auswahl gebracht werden, durch das Icon 66 europaweite, durch das Icon 68 deutsche, durch das Icon 70 Sender in Baden-Württemberg, durch das Icon 72 Sender im Raum Stuttgart und durch das Icon 74 Sender, die speziell für das Gebiet mit der Postleitzahl 70162 interessant sind. Durch Einstellung der Filtereinheiten 56a, 56b hat der Benutzer des Empfängers 14 sichergestellt, daß keine Pop, Rock und House-Sendungen zur Auswahl angeboten werden. Wie aus der Anzeige Spalte 76 hervorgeht, hat der Benutzer des Empfängers 14 die Filtereinheiten 56a, 56b so spezifiziert, dass, was das Musikangebot angeht, nur Jazz Sendungen zur Auswahl angeboten werden, vorliegend der zweite europäische Sender E2 und der vierzehnte deutsche Sender D14, der vorliegend, wie durch die doppelte Umrandung gekennzeichnet, ausgewählt wurde. Für die News hat der Benutzer des Empfängers 14 den Stuttgarter Sender S2 ausgewählt, sowie für Informationen den postleitzahlspezifischen Sender P1.

Durch Klicken auf das Icon 66 werden dem Benutzer des Empfängers 14 europäische Sender angeboten, die seinen Vorgaben in den Filtereinheiten 56a, 56b entsprechen. Aus diesen kann er dann auswählen und seine bevorzugten Sender der Spalte 76 zur Auswahl hinzufügen. Entsprechend werden dem Benutzer des Empfängers 14 durch Klicken auf das Icon 74 postleitzahlenspezifische Sender zur Auswahl geboten.

Durch die Icons 78, 80, 82 kann zwischen Radioempfang, Fernsehempfang und Intemetempfang umgeschaltet werden. Vorliegend, wie durch die doppelte Umrandung gekennzeichnet, hat der Benutzer das Icon 78 angeklickt und damit den Empfänger auf Radiobetrieb geschaltet.

Wie durch das Fenster 84 angedeutet, kann trotz des Empfangs eines Senders der Kategorie "Deutschland", d.h. eines überregionalen Senders, ortsspezifische, d.h. regionale Werbung auf der Anzeige 44 angezeigt werden.

Der gezeigte Aufbau des Empfängers 14 soll lediglich eine beispielhafte Realisierung darstellen. In einer alternativen Ausführungsform werden die Nutzdaten und die Hilfsdaten nach Zuordnung eines Merkmals nicht wieder zusammengeführt, sondern separat weiterverarbeitet. Die Anzeigeeinheit 44 kann auch Teil des Geräts sein, das an dem Ausgang 58 und den Empfänger 14 angeschlossen wird, beispielsweise eine Radioanzeige, die Anzeige eines Fernsehgeräts etc.

## Patentansprüche

1. Sende-Empfangs-System umfassend
eine Vielzahl von Sendern (12), die ausgelegt sind, digitale Daten auszusenden, die eine Vielzahl von Nutzdaten sowie den Nutzdaten zugeordnete erste Hilfsdaten umfassen, wobei die ersten Hilfsdaten mindestens eine ortsspezifische Kenngröße enthalten;
einen Empfänger (14), der ausgelegt ist, die digitalen Daten zu empfangen, mit einer Ortsspezifikationseinheit (40), in der mindestens eine zweite ortsspezifische Kenngröße spezifizierbar ist, wobei der Empfänger (14) einen Ausgang (58) aufweist, an dem Nutzdaten bereitstellbar sind,
wobei der Empfänger (14) weiterhin umfaßt:
eine Merkmalszuordnungseinheit (52), die den Nutzdaten ein Merkmal zuordnet, das dem Grad der Korrelation der in den zugeordneten Hilfsdaten enthaltenen ersten ortsspezifischen Kenngröße mit der zweiten ortsspezifischen Kenngröße entspricht,
**dadurch gekennzeichnet,**
**daß** das den Nutzdaten zugeordnete Merkmal eine Einteilung der Vielzahl von Sendern in Gruppen von verschiedenen Sendegebieten ermöglicht, wobei der Benutzer innerhalb der Gruppen den/die von ihm gewünschten Sender auswählen kann.

2. Sende-Empfangs-System nach Anspruch 1,
**dadurch gekennzeichnet,**
**daß** die zweite ortsspezifische Kenngröße dem Aufstellungsort des Empfängers (14) oder einem von einem Benutzer willkürlich ausgewählten Ort entspricht.

3. Sende-Empfangs-System nach Anspruch 1 oder 2,
**dadurch gekennzeichnet,**
**daß** den Nutzdaten zweite Hilfsdaten zugeordnet sind, und der Empfänger (14) zumindest eine Filtereinheit (56a, 56b) umfaßt, mit der die Nutzdaten im Hinblick auf die zweiten Hilfsdaten filterbar sind.

4. Sende-Empfangs-System nach einem der vorhergehenden Ansprüche,
**dadurch gekennzeichnet,**
**daß** die zweiten Hilfsdaten mit Angaben zu Arten von Fernsehsendungen und/oder Arten von Musiksendungen und/oder Angaben zu Internet-Homepages und/oder Angaben zu Werbung und Veranstaltungen korreliert sind.

5. Sende-Empfangs-System nach einem der Ansprüche 3 oder 4,
**dadurch gekennzeichnet,**
**daß** jede Filtereinheit (56a, 56b) von einer Bedienperson des Empfängers (14) spezifiziert werden kann.

6. Sende-Empfangs-System nach einem der vorhergehenden Ansprüche,
**dadurch gekennzeichnet,**
**daß** der Empfänger (14) weiterhin eine Anzeigeeinheit (44) umfaßt, auf der eine mit den Nutzdaten korrelierte Anzeige darstellbar ist.

7. Sende-Empfangs-System nach Anspruch 6,
**dadurch gekennzeichnet,**
**daß** die mit den Nutzdaten korrelierte Anzeige entsprechend dem den Nutzdaten zugeordneten Merkmal auf der Anzeigeeinheit (44) darstellbar ist.

8. Sende-Empfangs-System nach einem der vorhergehenden Ansprüche,
**dadurch gekennzeichnet,**
**daß** das den Nutzdaten zugeordnete Merkmal eine Aussage darüber enthält, ob und wo die mit den Nutzdaten korrelierte Anzeige auf der Anzeigeeinheit (44) dargestellt wird.

9. Sende-Empfangs-System nach einem der Ansprüche 6 bis 8,
**dadurch gekennzeichnet,**
**daß** der Empfänger (14) weiterhin eine Eingabeeinheit (42) umfaßt, durch die, vorzugsweise unter Zusammenwirken mit der Anzeigeeinheit (44), die zweite ortsspezifische Kenngröße und/oder die Spezifikationen der Merkmalszuordnungseinheit (52) und/oder der mindestens einen Filtereinheit ( 56a, 56b) angebbar sind.

10. Sende-Empfangs-System nach einem der vorhergehenden Ansprüche,
**dadurch gekennzeichnet,**
**daß** die digitalen Daten durch Satellitenausstrahlung (18, 20, 22), Kabelübertragung (28), Internetübertragung (32) oder terrestrische Ausstrahlung (36) an den Empfänger (14) übertragen werden.

11. Sende-Empfangs-System nach einem der vorhergehenden Ansprüche,
**dadurch gekennzeichnet,**
**daß** der Empfänger (14)ein DVB-Empfänger ist.

12. Sende-Empfangs-System nach einem der vorhergehenden Ansprüche,
**dadurch gekennzeichnet,**
**daß** die Nutzdaten Audiosignale und/oder Videosignale umfassen, und insbesondere Werbung und/oder Veranstaltungshinweise enthalten.

13. Empfänger, der ausgelegt ist, digitale Daten zu empfangen, die eine Vielzahl von Nutzdaten sowie den Nutzdaten zugeordnete erste Hilfsdaten umfassen, wobei die ersten Hilfsdaten mindestens eine ortsspezifische Kenngröße enthalten, mit einer Ortsspezifikationseinheit (40), in der mindestens eine zweite ortsspezifische Kenngröße spezifizierbar ist,
einem Ausgang (58), an dem Nutzdaten bereitstellbar sind,
einer Merkmalszuordnungseinheit (52), die den Nutzdaten ein Merkmal zuordnet, das dem Grad der Korrelation der in den zugeordneten Hilfsdaten enthaltenen ersten ortsspezifischen Kenngröße mit der zweiten ortsspezifischen Kenngröße entspricht,
**dadurch gekennzeichnet,**
**daß** das den Nutzdaten zugeordnete Merkmal eine Einteilung der Vielzahl von Sendern in Gruppen von verschiedenen Sendegebieten ermöglicht, wobei der Benutzer innerhalb der Gruppen den/die von ihm gewünschten Sender auf einer Anzeigeeinheit (44) auswählen kann.

14. Verfahren zur Übertragung digitaler Daten von mindestens einem Sender (12) an mindestens einen Empfänger (14), folgende Schritte aufweisend:
a) Zuordnen von ersten Hilfsdaten zu den zu übertragenden Nutzdaten, wobei die ersten Hilfsdaten mindestens eine erste ortsspezifische Kenngröße enthalten;
b) Senden der Nutzdaten und der zugeordeten ersten Hilfsdaten durch mindestens einen Sender (12);
c) Empfangen der Nutzdaten und der zugeordneten ersten Hilfsdaten durch mindestens einen Empfänger (14);
d) im Empfänger (14) korrelieren der in den empfangenen ersten Hilfsdaten enthaltenen ersten ortsspezifischen Kenngröße mit einer in einer Ortsspezifikationseinheit (40) des Empfängers (14) spezifizierten zweiten ortsspezifischen Kenngröße;
e) entsprechend dem Korrelationsgrad Zuordnen eines Merkmals an die zugehörigen Nutzdaten;
**gekennzeichnet durch** folgenden weiteren Schritt:
f) Einteilung der Vielzahl von Sendern in Gruppen von verschiedenen Sendegebieten basierend auf dem den Nutzdaten zugeordneten Merkmal,
wobei der Benutzer innerhalb der Gruppen den/die von ihm gewünschten Sender auswählen kann.

## Claims

1. Transmission-reception system comprising
a plurality of transmitters (12) configured to transmit digital data including a plurality of useful data as well as first auxiliary data associated with the useful data, wherein the first auxiliary data includes at least one location-specific characteristic parameter;
a receiver (14) configured to receive the digital data, having a location specification unit (40), in which at least a second location-specific characteristic parameter is specifiable, wherein the receiver (14) has an output (58), at which useful data are able to be provided,
wherein the receiver (14) further comprises:
a feature association unit (52) associating a feature with the useful data, which corresponds to the degree of correlation of the first location-specific characteristic parameter contained in the associated auxiliary data with the second location-specific characteristic parameter,
**characterized in that**
the feature associated with the useful data allows for dividing the plurality of transmitters in groups of different broadcasting areas, wherein the user is able to select the transmitter(s) desired by him among the groups.

2. Transmission-reception system according to claim 1,
**characterized in that**
the second location-specific characteristic parameter corresponds to the location of installation of the receiver (14) or to a location arbitrarily selected by a user.

3. Transmission-reception system according to claim 1 or 2,
**characterized in that**
second auxiliary data is associated with the useful data, and the receiver (14) includes at least one filter unit (56a, 56b), by which the useful data is filterable in view of the second auxiliary data.

4. Transmission-reception system according to any one of the preceding claims,
**characterized in that**
the second auxiliary data are correlated with indications to types of television broadcasts and/or types of music broadcasts and/or indications to Internet homepages and/or indications to commercials and events.

5. Transmission-reception system according to any one of claims 3 or 4,
**characterized in that**
each filter unit (56a, 56b) can be specified by an operator of the receiver (14).

6. Transmission-reception system according to any one of the preceding claims,
**characterized in that**
the receiver (14) further comprises a display unit (44), on which a display correlated with the useful data is presentable.

7. Transmission-reception system according to claim 6,
**characterized in that**
the display correlated with the useful data is presentable on the display unit (44) according to the feature associated with the useful data.

8. Transmission-reception system according to any one of the preceding claims,
**characterized in that**
the feature associated with the useful data contains a statement about whether and where the display correlated with the useful data is presented on the display unit (44).

9. Transmission-reception system according to any one of claims 6 to 8,
**characterized in that**
the receiver (14) further comprises an input unit (42), by which, preferably by cooperating with the display unit (44), the second location-specific characteristic parameter and/or the specifications of the feature association unit (52) and/or the at least one filter unit (56a, 56b) are specifiable.

10. Transmission-reception system according to any one of the preceding claims,
**characterized in that**
the digital data is transmitted to the receiver (14) by satellite broadcasting (18, 20, 22), cable transmission (28), Internet transmission (32) or terrestrial broadcasting (36).

11. Transmission-reception system according to any one of the preceding claims,
**characterized in that**
the receiver (14) is a DVB receiver.

12. Transmission-reception system according to any one of the preceding claims,
**characterized in that**
the useful data comprises audio signals and/or video signals, and especially contains commercials and/or event indications.

13. Receiver configured to receive digital data including a plurality of useful data as well as first auxiliary data associated with the useful data, wherein the first auxiliary data include at least one location-specific characteristic parameter, comprising a location specification unit (40), in which at least a second location-specific characteristic parameter is specifiable,
an output (58), at which useful data is able to be provided,
a feature association unit (52) associating a feature with the useful data, which corresponds to the degree of correlation of the first location-specific characteristic parameter contained in the associated auxiliary data with the second location-specific characteristic parameter,
**characterized in that**
the feature associated with the useful data allows for dividing the plurality of transmitters in groups of different broadcasting areas, wherein the user is able to select the transmitter(s) desired by him among the groups on a display unit (44).

14. Method for transmitting digital data from at least one transmitter (12) to at least one receiver (14) including the steps of:
a) associating first auxiliary data with the useful data to be transmitted,
wherein the first auxiliary data includes at least a first location-specific characteristic parameter;
b) transmitting the useful data and the associated first auxiliary data by at least one transmitter (12);
c) receiving the useful data and the associated first auxiliary data by at least one receiver (14);
d) in the receiver (14), correlating the first location-specific characteristic parameter contained in the received first auxiliary data with a second location-specific characteristic parameter specified in a location specification unit (40) of the receiver (14);
e) according to the degree of correlation, associating a feature with the associated useful data;
**characterized by** the further step of:
f) dividing the plurality of transmitters in groups of different broadcasting areas based on the feature associated with the useful data, wherein the user is able to select the transmitter(s) desired by him among the groups.

## Revendications

1. Système émetteur-récepteur, comprenant
une multitude d'émetteurs (12) dimensionnés pour émettre des données numériques comportant une multitude de données utiles ainsi que des premières données auxiliaires attribuées aux données utiles, les premières données auxiliaires comprenant au moins un paramètre de spécification locale;
un récepteur (14) dimensionné pour recevoir les données numériques et comprenant une unité de spécification locale (40) dans laquelle au moins un deuxième paramètre de spécification locale peut être spécifié, le récepteur (14) présentant une sortie (58) à laquelle des données utiles peuvent être mises à disposition,
le récepteur (14) comprenant par ailleurs:
une unité d'attribution de caractéristique (52) attribuant une caractéristique aux données utiles correspondant au degré de corrélation du premier paramètre de spécification locale contenu dans les données auxiliaires attribuées vis-à-vis du second paramètre de spécification locale,
**caractérisé en ce que**
la caractéristique attribuée aux données utiles permet une répartition de la multitude d'émetteurs dans des groupes de différentes zones de service, l'usager pouvant choisir l'émetteur/les émetteurs désiré/s dans lesdits groupes.

2. Système émetteur-récepteur selon la revendication 1, **caractérisé en ce que** le second paramètre de spécification locale correspond soit au lieu d'implantation du récepteur (14) soit à un endroit choisi arbitrairement par un usager.

3. Système émetteur-récepteur selon la revendication 1 ou 2, **caractérisé en ce que** de deuxièmes données auxiliaires sont attribuées aux données utiles, le récepteur (14) comprenant au moins une unité de filtrage (56a, 56b) permettant le filtrage des données utiles en vue des deuxièmes données auxiliaires.

4. Système émetteur-récepteur selon l'une des revendications précédentes, **caractérisé en ce que** les deuxièmes données auxiliaires sont corrélées à des renseignements concernant des types d'émissions de télévision et/ou des types d'émissions musicales et/ou des renseignements concernant des pages d'accueil d'Internet et/ou des renseignements de publicité ou concernant des manifestations.

5. Système émetteur-récepteur selon l'une des revendications 3 ou 4, **caractérisé en ce que** chaque unité de filtrage (56a, 56b) peut être spécifiée de la part d'un opérateur du récepteur (14).

6. Système émetteur-récepteur selon l'une des revendications précédentes, **caractérisé en ce que** le récepteur (14) comprend par ailleurs une unité d'affichage (44) sur laquelle un affichage corrélé aux données utiles peut être visualisé.

7. Système émetteur-récepteur selon la revendication 6, **caractérisé en ce que** l'affichage corrélé aux données utiles peut être visualisé sur l'unité d'affichage (44), conformément à la caractéristique attribuée aux données utiles.

8. Système émetteur-récepteur selon l'une des revendications précédentes, **caractérisé en ce que** la caractéristique attribuée aux données utiles contient une information indiquant si et où l'affichage corrélé aux données utiles est visualisé sur l'unité d'affichage (44).

9. Système émetteur-récepteur selon l'une des revendications 6 à 8, **caractérisé en ce que** le récepteur (14) comprend par ailleurs une unité d'introduction (42) permettant l'introduction du second paramètre de spécification locale et/ou des spécifications de l'unité d'attribution des caractéristiques (52), de préférence par coopération avec l'unité d'affichage (44), et/ou de l'au moins une unité de filtrage (56a, 56b).

10. Système émetteur-récepteur selon l'une des revendications précédentes, **caractérisé en ce que** les données numériques sont transmises au récepteur (14) par émission satellite (18, 20, 22), transmission par câble (28), transmission par l'Internet (32) ou émission terrestre (36).

11. Système émetteur-récepteur selon l'une des revendications précédentes, **caractérisé en ce que** le récepteur (14) est un récepteur DVB.

12. Système émetteur-récepteur selon l'une des revendications précédentes, **caractérisé en ce que** les données utiles contiennent des signaux audio et/ou vidéo et qu'elles comprennent surtout de la publicité et/ou des renseignements sur des manifestations.

13. Récepteur dimensionné pour recevoir des données numériques comportant une multitude de données utiles ainsi que des premières données auxiliaires attribuées aux données utiles, les premières données auxiliaires comprenant au moins un paramètre de spécification locale, comprenant une unité de spécification locale (40) dans laquelle au moins un second paramètre de spécification locale peut être spécifié,
une sortie (58) à laquelle des données utiles peuvent être mises à disposition,
une unité d'attribution de caractéristique (52) attribuant une caractéristique aux données utiles correspondant au degré de corrélation du premier paramètre de spécification locale contenu dans les données auxiliaires attribuées vis-à-vis du second paramètre de spécification locale,
**caractérisé en ce que**
la caractéristique attribuée aux données utiles permet une répartition de la multitude d'émetteurs dans des groupes de différentes zones de service, l'usager pouvant choisir l'émetteur/les émetteurs désiré/s dans lesdits groupes sur une unité d'affichage (44).

14. Procédé de transmission de données numériques depuis au moins un émetteur (12) vers un récepteur (14), comprenant les étapes suivantes:
a) attribution de premières données auxiliaires aux données utiles transmises, les premières données auxiliaires comprenant au moins un premier paramètre de spécification locale;
b) émission des données utiles et des premières données auxiliaires par l'intermédiaire d'au moins un émetteur (12);
c) réception des données utiles et des premières données auxiliaires attribuées par au moins un récepteur (14);
d) mise en corrélation, dans le récepteur (14), du paramètre de spécification locale contenu dans les premières données auxiliaires reçues à un second paramètre de spécification locale spécifié dans une unité de spécification locale (40) du récepteur (14);
e) conformément au degré de corrélation, attribution d'une caractéristique aux données utiles associées;
**caractérisé par** l'étape ultérieure suivante:
f) répartition de la multitude d'émetteurs dans des groupes de différentes zones de service, sur la base de la caractéristique attribuée aux données utiles, l'usager pouvant choisir dans lesdits groupes l'émetteur/les émetteurs désiré/s.
